# NEUE EUROPÄISCHE PATENTSCHRIFT

(11) **EP 0 771 597 B2**
(45) Veröffentlichungstag und Bekanntmachung des Hinweises auf die Entscheidung über den Einspruch: **12.12.2007**
(45) Hinweis auf die Patenterteilung: 12.09.2001
(21) Anmeldenummer: 96890161.1
(22) Anmeldetag: 10.10.1996
(51) Int. Cl.: B21D 7/02, B21D 53/74, E06B 3/673

(54) **Vorrichtung zum Biegen oder Krümmen von Hohlprofilleisten**
Apparatus for bending or curving hollow profiles
Dispositif pour plier ou courber des profilés creux

(30) Priorität: 31.10.1995 AT 179995
(43) Veröffentlichungstag der Anmeldung: 07.05.1997
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred

(56) Entgegenhaltungen:
- EP-A- 0 459 971
- EP-A- 0 483 044
- EP-A- 0 582 064
- DE-A- 4 116 268
- IT-B- 1 266 133

## Beschreibung

Die Erfindung betrifft eine Vorrichtung mit den Merkmalen des einleitenden Teils von Anspruch 1.

Vorrichtungen zum Biegen von Hohlprofilleisten sind bekannt. Beispielsweise kann auf die DE-41 16 268 A und die DE 41 16 521 A verwiesen werden, aus welchen Vorrichtungen zum Biegen von Hohlprofilleisten zu Abstandhalterrahmen für Isolierglasscheiben bekannt sind. Mit den bekannten Vorrichtungen können scharfkantige Abwinkelungen, bei welchen die zur Ecke führenden Schenkel der Hohlprofilleiste im rechten Winkel oder in beliebigen anderen (stumpfen oder spitzen) Winkeln zueinander stehen, erzeugt werden. Mit den bekannten Biegevorrichtungen ist es auch möglich, in Hohlprofilleisten Krümmungen mit weitgehend beliebigen Krümmungsradien herzustellen.

Eine Biegemaschine zum Biegen von Hohlprofilleisten zu Abstandhalterrahmen für Isolierglasscheiben gemäß dem Oberbegriff des Anspruchs 1 ist aus der EP 483 044 B bekannt.

Im Gegensatz zu den Biegevorrichtungen, wie sie aus der DE 41 16 268 A oder der DE 41 16 521 A bekannt sind, bei welchen sich das Biegewiderlager im wesentlichen über die Breite der Hohlprofilleiste erstreckt, sind bei der EP 483 044 B als Biegewiderlager zwei nietartige, mit Kopf und Stiel ausgebildete Stifte vorgesehen.

Nachteilig bei der Konstruktion gemäß der EP 483 044 B ist es, daß die als Biegewiderlager dienenden Stifte an seitlich an der zu biegenden Hohlprofilleiste anliegenden Backen befestigt sind, so daß sie nur mit den Führungsbacken bewegt werden können. Dies hat u.a. zur Folge, daß Relativbewegungen zwischen den als Biegewiderlager dienenden Stiften und den Backen nicht möglich sind, so daß bei den Zwischentransporten die Biegestifte nicht alleine von der Hohlprofilleiste abgehoben werden können, sondern auch die Backen relativ zur Hohlprofilleiste verstellt werden müssen.

Aufgabe der Erfindung ist es, ausgehend von der aus der EP 483 044 B bekannten Biegemaschine eine verbesserte Vorrichtung zum Biegen von Hohlprofilleisten anzugeben, mit der sowohl scharfwinkelige Ecken als auch gekrümmte Abschnitte in Hohlprofilleisten, wie sie beispielsweise für das Herstellen von Abstandhalterrahmen für Isolierglasscheiben verwendet werden, erzeugt werden können.

Erfindungsgemäß wird diese Aufgabe mit den Merkmalen des Anspruches 1 gelöst.

Bei der Erfindung kann das geteilte Biegewiderlager für die Zwischentransporte der Hohlprofilleiste von der Hohlprofilleiste abgehoben werden, ohne daß die Klemm- und Führungsbacken bewegt werden müssen. In diesem Zusammenhang ist darauf hinzuweisen, daß das erfindungsgemäße Biegewiderlager so weit auf die Hohlprofilleiste zu vorgeschoben werden kann, daß die dem Biegewiderlager zugekehrte, nach dem Biegen innen liegende Wand der Hohlprofilleiste auf die später die Außenecke bildende Wand der Hohlprofilleiste zu verformt wird.

Vorteilhafte und bevorzugte Ausführungsformen der Erfindung sind Gegenstand der Unteransprüche.

Weitere bevorzugte Merkmale und Einzelheiten sowie Vorteile der erfindungsgemäßen Vorrichtung ergeben sich aus der nachstehenden Beschreibung eines bevorzugten Ausführungsbeispieles der Erfindung, in welcher auf die angeschlossenen Zeichnungen Bezug genommen ist. Es zeigt:
Fig. 1 im Schnitt ein Biegewiderlager und zwei Klemm- und Führungsbacken einer Vorrichtung zum Biegen von Hohlprofilleisten,
Fig. 2 bis 4 den einen Biegewiderlagerteil in verschiedenen Ansichten,
Fig. 5 bis 7 den anderen Biegewiderlagerteil in verschiedenen Ansichten,
Fig. 8 die Halterung des Biegewiderlagers in Schrägansicht und
Fig. 9 die Halterung von Fig. 8 in einer anderen Ansicht mit einem Antrieb zum Bewegen des Biegewiderlagers.

Bevor im einzelnen auf die Beschreibung der Zeichnungsfiguren eingegangen wird, wird darauf hingewiesen, daß das in den Zeichnungen gezeigte Biegewiderlager und die Klemm- und Führungsbacken in eine Vorrichtung eingebaut sein können, die so wie aus der DE 41 16 268 A oder der DE 41 16 251 A bekannt ausgebildet sein kann. Eine solche Biegevorrichtung besitzt üblicherweise eine Vorrichtung zum Zuführen von Hohlprofilleisten, eine seitliche Stützwand, an der die abgebogenen Abschnitte der Hohlprofilleiste anliegen, einen Biegehebel, der zum Abbiegen der Hohlprofilleiste um das Biegewiderlager hochschwenkbar ist, sowie Fördervorrichtungen (z.B. an der Hohlprofilleiste angreifende Vorschubgreifer) für den Transport der Hohlprofilleiste zwischen den einzelnen Biegeschritten.

Es ist weiters darauf hinzuweisen, daß mit dem erfindungsgemäßen Biegewiderlager, nach einer aus der DE 41 16 521 A bekannten Arbeitsweise, in Hohlprofilleisten auch gekrümmte Abschnitte erzeugt werden können, indem die Hohlprofilleiste unter dem in seine Wirkstellung abgesenktem Biegewiderlager gegen den schräg gestellten, also aus der Förderrichtung etwas angehobenen und vorzugsweise stillstehenden Biegehebel vorgeschoben wird, so daß ein gekrümmter Abschnitt der Hohlprofilleiste erzeugt wird.

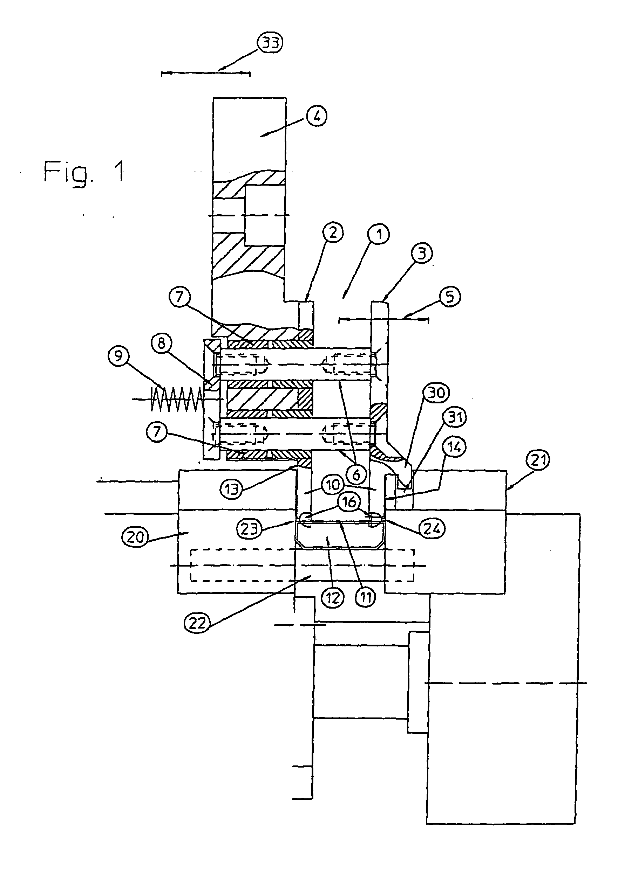

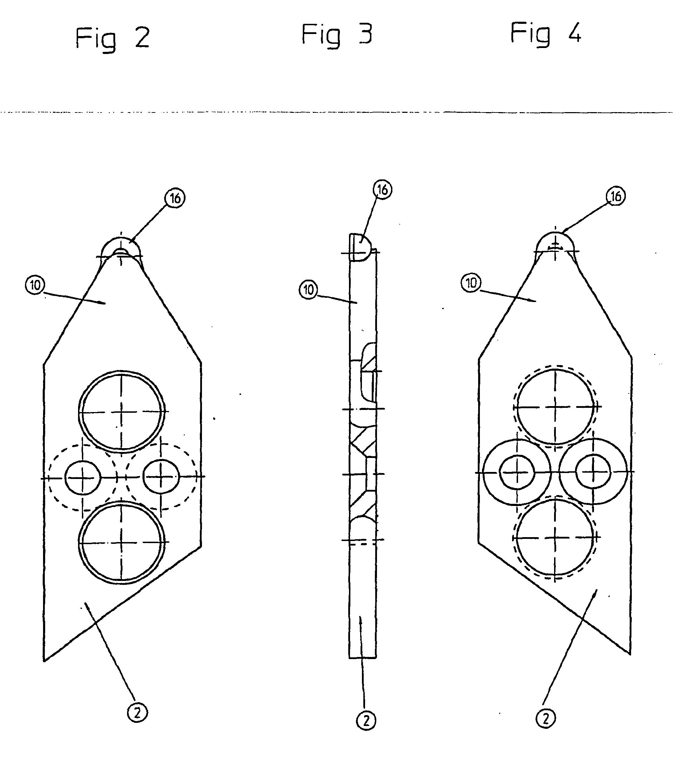

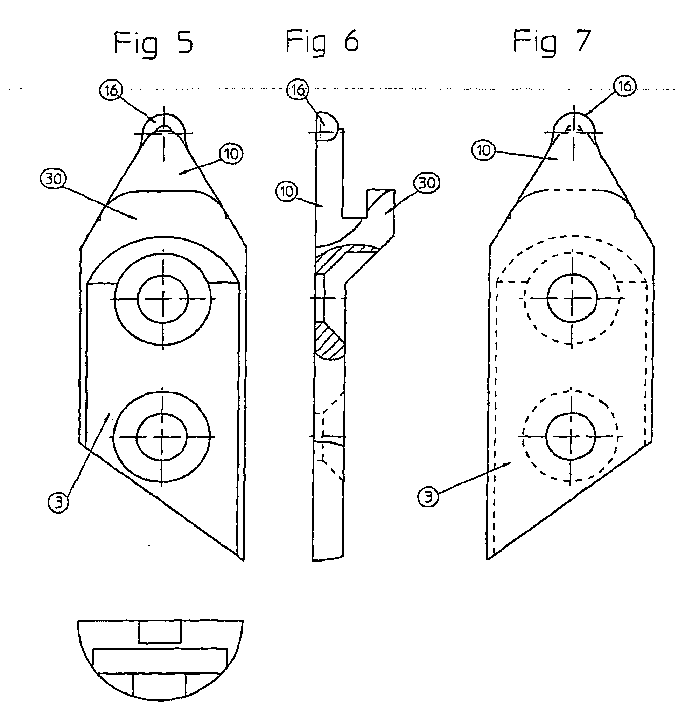

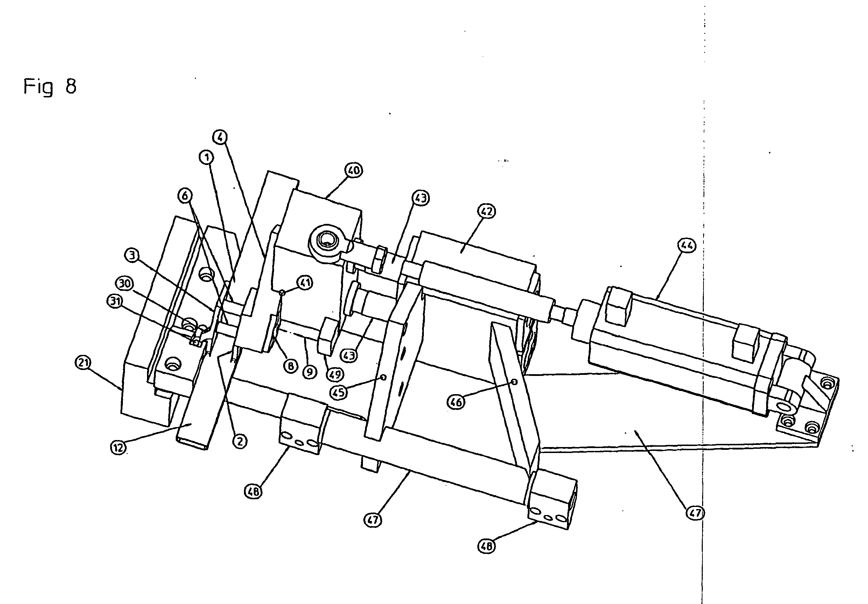

Im einzelnen besteht das Biegewiderlager 1 aus zwei Widerlagerteilen 2,3, die an einem gemeinsamen Träger 4 getragen werden, der seinerseits an einer Halterung 40 (Fig. 8) montiert ist. Der eine Widerlagerteil 2 (Fig. 2 bis 4) ist an dem Träger 4 starr befestigt. Der zweite Biegewiderlagerteil 3 (Fig. 5 bis 7) ist in Richtung des Doppelpfeiles 5 in Fig. 1 verstellbar. Hierzu ist der zweite Biegewiderlagerteil 3 mit Führungsstiften 6 verbunden, z.B. mit diesen verschraubt. Die Führungsstifte 6 durchgreifen Löcher im Widerlagerteil 2 und sind in Führungsbuchsen 7 im Träger 4 des Biegewiderlagers 1 gleitend aufgenommen. An einer mit den Führungsstiften 6 des beweglichen Widerlagerteils 3 verbundenen Platte 8 greift eine Druckfeder 9 an, die mit ihrem anderen Ende (Fig. 8) an einem mit dem Träger 4 oder der Halterung 40 für das Biegewiderlager 1 verbundenen Bauteil 49 abgestützt ist, so daß der bewegliche Biegewiderlagerteil 3 im Sinne einer Bewegung vom trägerfesten Widerlagerteil 2 weg federbelastet ist.

Anstelle der Schraubenfeder 9 kann auch ein anderes Federmittel, wie eine Druckluftfeder od. dgl., vorgesehen sein.

Das Biegewiderlager 1 ist in seiner Bereitschaftsstellung so ausgerichtet, daß sich die freien Enden 10 der Widerlagerteile 2, 3 knapp vor der oberen Wand 11 (nach dem Biegen die Innenwand) der Hohlprofilleiste 12 befinden. Sowohl in der Bereitschaftsstellung als auch in der in Fig. 1 gezeigten Wirkstellung ist das Biegewiderlager 1 mit seinen vorderen Enden 10 zwischen den Klemm- und Führungsbacken 20, 21 aufgenommen.

Die Klemm- und Führungsbacken 20, 21 sind beispielsweise so, wie aus der DE 41 16 268 A bekannt ausgebildet. Zwecks Anpassung an die Breite der zu biegenden Hohlprofilleiste 12 ist die eine Backe 20 im Maschinengestell ortsfest montiert, wogegen die andere Backe 21 mit Hilfe eines Druckmittelzylinders auf Führungsstangen 22, die gleichzeitig als Abstützung der Hohlprofilleiste 12 von unten her dienen können, verschiebbar geführt ist.

Dabei ist die Anordnung, wie aus Fig. 1 ersichtlich, so getroffen, daß der am Träger 4 fest montierte Widerlagerteil 2 der ortsfesten Backe 20 und der bewegliche Widerlagerteil 3 der beweglichen Backe 21 zugeordnet ist. Die Außenflächen 13, 14 der Widerlagerteile 2, 3 sind den Innenflächen 23, 24, also den der zu biegenden Hohlprofilleiste 12 zugekehrten Flächen 23, 24 der Klemm- und Führungsbacken 20, 21 zugeordnet und liegen bei in den Raum zwischen den Klemm- und Führungsbacken 20, 21 eintauchendem Biegewiderlager 1 an diesen Flächen 23, 24 an.

Die freien Enden 10 der Widerlagerteile 2, 3, die wie in Fig. 2 bis 7 gezeigt, spitz zulaufend ausgebildet sind, können mit einem wulstartigen Ansatz 16 versehen sein. Dieser Ansatz 16 ist gegenüber den Außenflächen 13, 14 der Widerlagerteile 2,3, d.h. den Flächen, die in der Bereitschafts- und in der Wirkstellung an den Flächen 23, 24 der Klemm- und Führungsbacken 20, 21 anliegen, nach innen abgesetzt, so daß beim Bewegen des Biegewiderlagers 1 in seine Wirkstellung (Fig. 1) die obere bzw. Innenwand 11 der Hohlprofilleiste 12 nach innen verformt wird, um den Biegevorgang einzuleiten, ohne dabei die Seitenwände der Hohlprofilleiste 12, das sind die Wände der Hohlprofilleiste 12, die an den Flächen 23, 24 der Klemm- und Führungsbacken 20, 21 anliegen, zusammenzudrücken oder zu stauchen. Beim eigentlichen Biegevorgang stützen die Ansätze 16 die Seitenwände der Hohlprofilleiste 12 von innen her, so daß diese nicht nach innen ausweichen können.

Der Träger 4 des Biegewiderlagers ist, wie in Fig. 8 gezeigt, an einer Halterung 40 befestigt. Hierzu ist in der Halterung 40 eine Nut 41 ausgespart, in die der Träger 4 eingesetzt und beispielsweise mit Hilfe einer Schraube befestigt ist. Die Halterung 40 ist über zwei mit ihr verbundene Führungsstangen 43 in einem Block 42 unter der Wirkung eines doppelt wirkenden Druckmittelzylinders 44 verschiebbar geführt. Der Block 42 ist über zwei Verbindungsplatten 45 und 46 an einer Welle 47 befestigt, die in maschinengestellfesten Lagerblöcken 48 um eine zur Biegeebene senkrechte Achse verschwenkbar gelagert ist. An der einen Platte 45 oder 46, beispielsweise an der Platte 45, greift ein Druckmittelzylinder oder eine der weiter unten beschriebenen Anordnungen aus zwei oder drei Druckmittelzylindern an, um den Block 42 und damit die Halterung 40 und letztlich über den Träger 4 das Biegewiderlager 1 aus der Warteposition in die Bereitschaftsstellung und in die Wirkstellung und wieder zurück bewegen zu können.

Der Druckmittelzylinder 44, der zum Verstellen der Halterung 40 vorgesehen ist, ist wie ebenfalls in Fig. 8 gezeigt, an einer von der Platte 46 abstehenden Platte 47 befestigt.

Es ist noch darauf hinzuweisen, daß der Übersichtlichkeit wegen in Fig. 8 die maschinengestellfeste Klemm- bzw. Führungsbacke 20 nicht dargestellt ist.

An der Halterung 40 ist auch ein Anschlag 49 für die an der Platte 8 angreifende Druckfeder 9, die den Widerlagerteil 3 über die Platte 8 und die Führungsstifte 6 belastet, vorgesehen.

Dank der in Fig. 8 gezeigten Konstruktion kann das Biegewiderlager 1 über seinen Träger 4 und die Halterung 40 in der Biegeebene aus der Wartestellung in die Bereitschaftsstellung und in die Wirkstellung bewegt werden. Weiters kann das Biegewiderlager 1, nachdem es aus dem Bereich zwischen den beiden Klemm- und Führungsbacken 20, 21 herausgehoben worden ist, quer zur Biegeebene, z.B. hinter die Stützwand zurückgezogen werden, um den Abtransport von fertigen Abstandhalterrahmen für Isolierglasscheiben nicht zu behindern.

Das Biegewiderlager 1 mit seinen zwei Widerlagerteilen 2, 3 wird aus der Warteposition, in der es sich in größerem Abstand von den Klemm- und Führungsbacken 20, 21 befindet, in die Bereitschaftsstellung verschwenkt, in der die Spitzen 10 der Widerlagerteile 2, 3 zwischen die beiden Klemm- und Führungsbacken 20, 21 eingreifen. Zuvor wurde die bewegliche Klemm- und Führungsbacke 21 so weit von der maschinengestellfesten Klemm- und Führungsbacke 22 wegbewegt, daß zwischen den Klemm- und Führungsbacken 20, 21 ein Abstand vorliegt, der größer ist als jener des maximalen Abstandes der Außenflächen 13, 14 der Widerlagerteile 2, 3. Durch Verschieben der beweglichen Klemmund Führungsbacke 21 relativ zur maschinengestellfesten Klemm- und Führungsbacke 20 wird die wirksame Breite des Biegewiderlagers 1 selbsttätig und stufenlos verstellt.

Zum Verstellen der beweglichen Klemm- und Führungsbacke 21 und zum Einstellen der wirksamen Breite des geteilten Biegewiderlagers 1 auf die Breite der abzubiegenden oder zu krümmenden Hohlprofilleiste 12 kann die bewegliche Klemm- und Führungsbacke 21 gegebenenfalls über einen Hebel von einem Pneumatikzylinder verschoben werden, wobei die Klemm- und Führungsbacke 21 einfach auf Anschlag an die Hohlprofilleiste 12 verfahren wird, ohne daß eine gesonderte Vorrichtung zum Erfassen der Breite der Hohlprofilleiste 12, um einen bestimmen Verfahrweg der beweglichen Klemm- und Führungsbacke 21 zu bewirken, erforderlich ist.

In Fig. 1, 6 und 8 ist gezeigt, daß an der Außenseite 14 des beweglichen Widerlagerteils 3 ein hakenartiger Ansatz 30 angeordnet ist, der bei in die Wirkstellung verschobenem Biegewiderlager 1 in eine Aussparung 31 an der Oberseite der beweglichen Klemm- und Führungsbacke 21 eingreift (Fig. 1 und 8), so daß der bewegliche Widerlagerteil 3 mit der beweglichen Klemm- und Führungsbacke 21 verriegelt ist. Dies verhindert, daß sich der bewegliche Widerlagerteil 3 beim Ausführen eines Biegevorganges entgegen der Wirkung der Druckfeder 9 verstellt. Dies ist insbesondere von Bedeutung, wenn eine Hohlprofilleiste 12 gekrümmt werden soll, d.h. wenn sie unter dem in seiner Wirkstellung befindlichen Biegewiderlager 1 gegen eine am Biegehebel befindliche, schräg gestellte Auflauffläche gefördert wird.

Dadurch, daß das geteilte Biegewiderlager 1 von den Klemm- und Führungsbacken 20, 21 getrennt ausgebildet ist, kann es relativ zu den Klemm- und Führungsbacken 20, 21 auch dann bewegt werden (Verstellen aus der Wirkstellung in die Bereitschaftsstellung und wieder zurück), wenn die Klemm- und Führungsbacken 20, 21 an den Seitenwänden der zu biegenden Hohlprofilleiste 12 anliegen. So ist es möglich, die Zwischentransporte der Hohlprofilleiste 12 zwischen den einzelnen Biegevorgängen ohne Öffnen der Klemm- und Führungsbakken 20, 21 auszuführen. Das geteilte Biegewiderlager 1 kann ohne Verändern der Lage der Klemm- und Führungsbacken 20, 21 aber auch zur Gänze aus dem Bereich zwischen diesen, also aus seiner zwischen die Klemm- und Führungsbacken 20, 21 eintauchenden Stellung, heraus und in die Wartestellung bewegt und beispielsweise hinter die Stützwand zurückgezogen werden, wenn eine Ecke zu biegen ist, bei der die zur Ecke laufenden Schenkel der Hohlprofilleiste 12 miteinander einen spitzen Winkel einschließen.

Um das Biegewiderlager 1 und seinen Träger 4 mit dessen Halterung 40 aus der Warteposition in die Bereitschaftsstellung und in die Wirkstellung zu bewegen, wird die Halterung 40, wie in Fig. 8 beispielhaft gezeigt, von einem im Maschinengestell um eine zur Biegeebene senkrechte Achse verschwenkbar gelagerten Maschinenteil (Block 42) getragen, zu dessen Betätigung beispielsweise ein Druckmittelzylinder vorgesehen ist. Dabei kann eine Anordnung aus zwei gleichachsig angeordneten Druckmittelzylindern vorgesehen sein, von der ein Druckmittelzylinder den Hub des Trägers 4 und damit des Biegewiderlagers 1 aus der Wartestellung in die Bereitschaftsstellung und der zweite Druckmittelzylinder mit einer entsprechenden Hubbegrenzung das Bewegen aus der Bereitschaftsstellung in die Wirkstellung und wieder zurück in die Bereitschaftsstellung ausführt.

Die Halterung 40 für den Träger 4 des Biegewiderlagers 1 ist mittels des Druckmittelzylinders 44 über die Führungen 43 senkrecht (Pfeil 33) zur Biegeebene verstellbar.

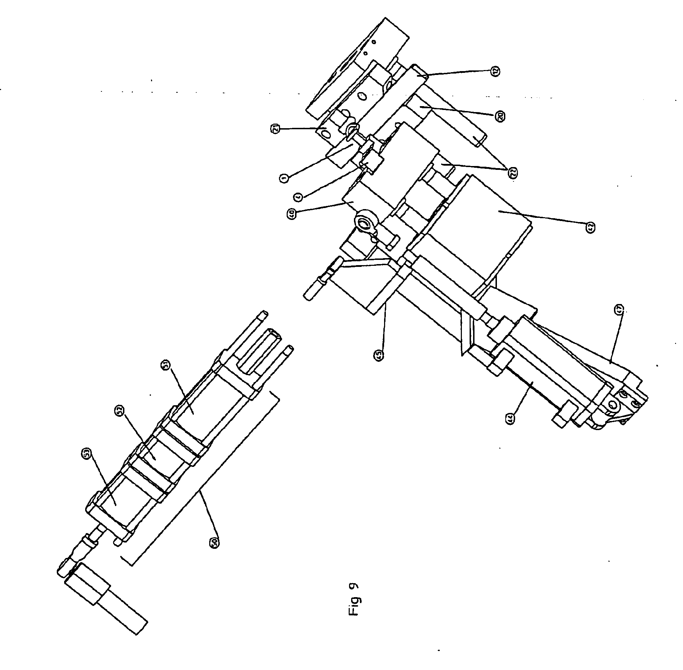

Zum Schwenken des Biegewiderlagers 1 um die durch die Lagerblöcke 48 definierte Achse kann anstelle der beschriebenen Anordnung mit zwei Druckmittelzylindern und einem Anschlag auch die in Fig. 9 gezeigte Anordnung 50 bestehend aus drei gleichachsig angeordneten Druckmittelzylindern 51, 52 und 53 vorgesehen sein. Für das Schwenken der Baueinheit bestehend aus dem Biegewiderlager 1, der Halterung 4 und dem Block 42 sowie dem Druckmittelzylinder 44, die auf der Welle 47 montiert ist, ist bei der Ausführungsform nach Fig. 9 eine Anordnung 50, bestehend aus drei hintereinander geschalteten Druckmittelzylindern 51, 52 und 53, die unterschiedliche Hublängen besitzen, vorgesehen.

Um das Biegewiderlager 1 aus einer zurückgezogenen Stellung in die Warteposition zu bewegen, wird der Druckmittelzylinder 51 mit dem größten Hub betätigt. Durch Betätigen (Ausfahren) des Druckmittelzylinders 53 mit einem Hub, der kleiner ist als jener des Zylinders 51, jedoch größer ist als jener des Zylinders 52, wird das Biegewiderlager 1 in die Bereitschaftsstellung bewegt. Um das Biegewiderlager 1 aus der Bereitschaftsstellung in die Wirkstellung zu bewegen, wird der dritte Druckmittelzylinder 52 mit dem kleinsten Hub betätigt, so daß jetzt alle drei Druckmittelzylinder 51, 52, 53 der Anordnung 50 in ihrer ausgefahrenen Stellung sind. Wenn das Biegewiderlager 1 nur zwischen der Wirkstellung und der Bereitschaftsstellung hin und her bewegt werden soll (dabei bleiben die Spitzen 10 der beiden Widerlagerteile 2 und 3 im Bereich der Klemmbacken 20 und 21) genügt es, den Druckmittelzylinder 52 zu betätigen.

Es ist noch darauf hinzuweisen, daß das geteilte Biegewiderlager 1 in seiner Wirkstellung einschließlich seines Trägers 4 zur Zuführrichtung der Hohlprofilleiste 12 unter einem Winkel von annähernd 45° ausgerichtet sein kann.

## Patentansprüche

1. Vorrichtung zum Biegen von Hohlprofilleisten (12) mit Klemm- und Führungsbacken (20, 21), von welchen eine (21) zum Verändern des gegenseitigen Abstandes der Klemm- und Führungsbacken (20, 21) relativ zur anderen Backe (20) verschiebbar geführt und die andere Backe (2) im Maschinengestell ortsfest montiert ist, mit einem Biegewiderlager (1), das unabhängig von den Klemm- und Führungsbacken verstellbar ist und das aus zwei Widerlagerteilen (2, 3) besteht, deren Abstand voneinander veränderbar ist, und mit einem verschwenkbaren Biegehebel,
**dadurch gekennzeichnet, dass** die Widerlagerteile (2, 3) unabhängig von den Klemm- und Führungsbacken (20, 21) verstellbare Bauteile sind, und dass die Widerlagerteile (2, 3) relativ zu den Klemm- und Führungsbacken (20, 21) in der Biegeebene verstellbar sind,
dass die Widerlagerteile (2, 3) an einem gemeinsamen Träger (4) getragen werden und dass der eine Widerlagerteil (2) am Träger (4) montiert und starr befestigt ist, dass der andere Widerlagerteil (3) relativ zu dem am Träger (4) montierten Widerlagerteil (2) in einer Richtung (Pfeil 5) senkrecht zur Biegeebene verstellbar ist,
dass der am Träger (4) fest montierte Widerlagerteil (2) der ortsfesten Backe (20) und der bewegliche Widerlagerteil (3) der beweglichen Backe (21) zugeordnet ist,
dass der bewegliche Widerlagerteil (3) wenigstens in der Wirklage des Biegewiderlagers (1) im Sinne des Unterbindens einer Bewegung quer zur Biegeebene mit der beweglichen Backe (21) verriegelt ist und
dass die voneinander weg weisenden Außenflächen (13, 14) der beiden Widerlagerteile (2, 3) den einander zugekehrten Innenflächen (23, 24) der Klemm- und Führungsbacken (20, 21) zugekehrt sind und bei an den Seitenflächen einer zu biegenden Hohlprofilleiste (12) anliegenden Klemm- und Führungsbacken (20, 21) an den an den Seitenflächen der Hohlprofilleiste (12) anliegenden Flächen (23, 24) der Klemm- und Führungsbacken (20, 21) anliegen.

2. Vorrichtung nach Anspruch 1, **dadurch gekennzeichnet, daß** der bewegliche Widerlagerteil (3) unter der Wirkung einer Feder (9) steht, die ihn von am Träger (4) montierten Widerlagerteil (2) weg belastet.

3. Vorrichtung nach einem der Ansprüche 1 oder 2, **dadurch gekennzeichnet, daß** der bewegliche Widerlagerteil (3) an wenigstens zwei Führungsstäben (6) befestigt ist, die in Führungen (7) im Träger (4) für das Biegewiderlager (1) geführt sind.

4. Vorrichtung nach Anspruch 2 oder 3, **dadurch gekennzeichnet, daß** auf der dem Biegewiderlager (1) gegenüberliegenden Seite des Trägers (4) an den Führungstäben (6) für den beweglichen Widerlagerteil (3) eine Druckfeder (9) angreift.

5. Vorrichtung nach Anspruch 4, **dadurch gekennzeichnet, daß** die Druckfeder (9) an einer mit den Führungsstäben (6) verbundenen Platte (8) angreift und an einem mit dem Träger (4) wenigstens unmittelbar verbundenen Bauteil (40, 49) abgestützt ist.

6. Vorrichtung nach einem der Ansprüche 1 bis 5, **dadurch gekennzeichnet, daß** das Biegewiderlager (1) aus einer Warteposition, in der es nicht zwischen die Klemm- und Führungsbacken (20, 21) eingreift, in eine zwischen die Klemm- und Führungsbacken (20, 21) eingreifenden Bereitschaftsstellung (Fig. 1) und aus dieser in eine Wirkstellung, in der die freien Enden (10, 16) der Widerlagerteile (2, 3) von der zwischen den Klemm- und Führungsbacken (20, 21) vorgesehenen Auflage für die zu biegende Hohlprofilleiste (12) einen Abstand aufweisen, der kleiner ist als die in der Biegeebene gemessene Höhe der Hohlprofilleiste (12), verstellbar ist.

7. Vorrichtung nach einem der Ansprüche 1 bis 6, **dadurch gekennzeichnet, daß** die freien Enden (10) der Widerlagerteile (2, 3), quer zur Biegeebene gesehen, keilförmig ausgebildet sind.

8. Vorrichtung nach einem der Ansprüche 1 bis 7, **dadurch gekennzeichnet, daß** an den freien Enden (10) der Widerlagerteile (2, 3) wulstartige Ansätze (16) vorgesehen sind.

9. Vorrichtung nach Anspruch 8, **dadurch gekennzeichnet, daß** wenigstens die wulstartigen Ansätze (16) gegenüber den den einander zugekehrten Flächen (23, 24) der Klemm- und Führungsbacken (20, 21) zugewendeten Seitenflächen (13, 14) der Widerlagerteile (2, 3) abgesetzt sind, so daß sie von den einander zugekehrten Flächen (23, 24) der Klemm- und Führungsbacken (20, 21) einen Abstand aufweisen.

10. Vorrichtung nach Anspruch 1, **dadurch gekennzeichnet, daß** der bewegliche Widerlagerteil (3) einen hakenförmigen Ansatz (30) aufweist, dem eine Verriegelungsausnehmung (31) in der beweglichen Backe (21) zugeordnet ist, wobei der hakenförmige Ansatz (30) bei in die Wirklage verstelltem Biegewiderlager (1) in die Verriegelungsausnehmung (31) eingreift.

11. Vorrichtung nach einem der Ansprüche 1 bis 10, **dadurch gekennzeichnet, daß** zum Verstellen des Biegewiderlagers (1) in die Wartestellung, in die Bereitschaftsstellung und in die Wirkstellung eine Anordnung (50) aus drei Druckmittelzylindern (51, 52, 53) vorgesehen ist, die wenigstens mittelbar am Biegewiderlager (1) angreift.

12. Vorrichtung nach Anspruch 11, **dadurch gekennzeichnet, daß** die Anordnung (50) aus Druckmittelzylindern über einen Ansatz (45) an den Block (42), der die Halterung (40) für den Träger (4) trägt, angreift.

13. Vorrichtung nach Anspruch 11 oder 12, **dadurch gekennzeichnet, daß** die Druckmittelzylinder (51, 52 und 53) der Anordnung (50) unterschiedliche Hublängen besitzen.

14. Vorrichtung nach einem der Ansprüche 11 bis 13, **dadurch gekennzeichnet, daß** der Druckmittelzylinder (51) der Anordnung (50) mit dem größten Hub dazu bestimmt ist das Biegewiderlager (1) in die Wartestellung zu bewegen.

15. Vorrichtung nach einem der Ansprüche 11 bis 14, **dadurch gekennzeichnet, daß** ein Druckmittelzylinder (53) mit einem Hub, der kleiner ist als die des einen (51) und größer ist als die des anderen Druckmittelzylinders (52) vorgesehen ist, um das Biegewiderlager (1) aus der Wartestellung in die Bereitschaftsstellung zu bewegen.

16. Vorrichtung nach einem der Ansprüche 11 bis 15, **dadurch gekennzeichnet, daß** der Druckmittelzylinder (52), welcher das Biegewiderlager (1) zwischen der Wirkstellung und der Bereitschaftsstellung bewegt, der Druckmittelzylinder (52) mit dem kürzesten Hub ist.

## Claims

1. Device for bending hollow profile strips (12), with clamping and guide jaws (20,21), one (21) of which is displaceably guided relative to the other jaw (20), in order to change the mutual spacing of the clamping and guide jaws (20,21) the other jaw (20) being mounted securely on the machine frame, with a bending abutment (1), which can be adjusted independently from the clamping and guide jaws (20,21) and which consists of two bending abutment parts (2,3) the spacing of which from each other is changeable, and with a pivotable bending lever, **characterised in that** the abutment parts (2,3) are components which are displaceable independently of the clamping and guide jaws (20,21), and **in that** the abutment parts (2,3) are displaceable in the bending plane relative to the clamping and guide jaws (20,21), **in that** the abutment parts (2,3) are carried on a common carrier (4), and **in that** the one abutment part (2) is mounted and securely fastened to the carrier (4), **in that** the other abutment part (3) is displaceable relative to the abutment part (2) mounted on the carrier (4) in a direction (arrow 5) perpendicular to the bending plane, **in that** the abutment part (2) securely mounted on the carrier (4) is co-ordiziated to the securely mounted jaw (20) and the moveable abutment part (3) is co-ordinated to the movable guide jaw (21), **in that** the moveable abutment part (3) is locked to the moveable jaw (21) at least in the operative position of the bending abutment (1) for the purpose of stopping a movement transversely relative to the bending plane, and **in that** the outer faces (13,14) of both abutment parts (2,3), which are orientated away from each other, are orientated towards the inner faces (23,24) of the clamping and guide jaws (20,21), being orientated towards each other, and abut against the faces (23,24) of the clamping and guide jaws (20,21), which abut against the lateral faces of the hollow profile strip (12) when the clamping and guide jaws (20,21) abut against the lateral faces of a hollow profile strip (12) to be bent.

2. Device according to claim 1, **characterised in that** the moveable abutment part (3) is under the influence of a spring (9) which stresses said part (3) away from the abutment part (2) mounted on the carrier (4).

3. Device according to one of claims 1 or 2, **characterised in that** the moveable abutment part (3) is secured to at least two guide bars (6) which are guided in guides (7) in the carrier (4) for the bending abutment (1).

4. Device according to claims 2 or 3, **characterised in that** a compression spring (9) engages on the guide bars (6) for the moveable abutment part (3) on the side of the carrier (4) which is situated opposite the bending abutment (1).

5. Device according to claim 4, **characterised in that** the compression spring (9) engages on a plate (8) connected to the guide bars (6) and is supported on a component (40,49) which is at least directly connected to the carrier (4),

6. Device according to one of the claims 1 to 5, **characterised in that** the bending abutment (1) is displaceable from a waiting position, in which it does not engage between the clamping and guide jaws (20,21) into a stand-by position engaging between the clamping and guide jaws (20,21) (Fig.1) and from said position into an operative position, in which the free ends (10,16) of the abutment parts (2,3) have a spacing from the support provided between the clamping and guide jaws (20,21) for the hollow profile strip (12) to be bent, which spacing is smaller than the height of the hollow profile strip (12) measured in the bending plane.

7. Device according to one of the claims 1 to 6, **characterised in that** the free ends of the abutment parts (2,3) have a wedge-shaped configuration, as observed transversely relative to the bending plane.

8. Device according to one of the claims 1 to 7 **characterised in that** bead-like extensions (16) are provided on the free ends (10) of the abutment parts (2,3).

9. Device according to claim 8, **characterised in that** at least the bead-like extensions (16) are offset relative to the lateral faces (13,14) of the abutment parts (2, 3), which faces are orientated towards the faces (23, 24) of the clamping and guide jaws (20, 21), which faces are orientated towards each other so that said extensions have a spacing from the faces (23, 24) of the clamping and guide jaws (20, 21), which faces are orientated towards each other.

10. Device according to claim 1, **characterised in that** the movable abutment part (3) has a hook-shaped extension (30), to which a locking recess (31) in the moveable jaw (21) is assigned, the hook-shaped extension (30) engaging in the locking recess (31) when the bending abutment (1) is displaced into the operative position.

11. Device according to one of the claims 1 to 10, **characterised in that** an arrangement (50) of three compression cylinders (51, 52, 53) which engages at least indirectly on the bending abutment (1) is provided in order to displace the bending abutment (1) into the waiting position, into the stand- by position and into the operative position.

12. Device according to claim 11, **characterised in that** the arrangement (50) of compression cylinders engages, via an extension (45), on the block (42) which carries the mounting (40) for the carrier (4).

13. Device according to claim 11 or 12, **characterised in that** the compression cylinders (51,52 and 53) of the arrangement (50) have different stroke lengths.

14. Device according to one of the claims 11 to 13, **characterised in that** the compression cylinder (51) of the arrangement (50) having the longest stroke is intended to move the bending abutment (1) into the waiting position.

15. Device according to one of the claims 11 to 14, **characterised in that** a compression cylinder (53) is provided with a stroke which is smaller than that of the one cylinder (51) and is greater than that of the other compression cylinder (52) in order to move the bending abutment (1) from the waiting position into the stand-by position.

16. Device according to one of the claims 11 to 15, **characterised in that** the compression cylinder (52), which moves the bending abutment (1) between the operative position and the stand-by position, is the compression cylinder (52) with the shortest stroke.

## Revendications

1. Dispositif pour le pliage de barres de profilé creux (12) comportant des mâchoires de serrage et de guidage (20, 21), parmi lesquelles l'une (21) des mâchoires au moins peut être déplacée par rapport à l'autre mâchoire (20), aux fins de modifier la distance réciproque des mâchoires de serrage et de guidage (20, 21), et l'autre mâchoire (20) est montée fixe dans un bâti de machine, un contre-appui de pliage (1) qui peut être déplacé dans le plan de pliage, indépendamment des mâchoires de serrage et de guidage (20, 21), et est formé de deux éléments de contre-appui (2, 3) dont l'écartement réciproque peut être modifié, ainsi qu'un levier de pliage pivotant, **caractérisé en ce que** les éléments de contre-appui (2, 3) sont des éléments qui peuvent être déplacés indépendamment des mâchoires de serrage et de guidage (20, 21), **en ce que** les éléments de contre-appui (2, 3) sont réglables dans le plan de pliage par rapport aux mâchoires de serrage et de guidage (20, 21), **en ce que** les éléments de contre-appui (2, 3) sont montés sur un support (4) commun, **en ce que** l'un des éléments de contre-appui (2) est monté sur le support (4) et est fixé de manière rigide, **en ce que** l'autre élément de contre-appui (3) peut être déplacé dans une direction (flèche 5) perpendiculairement au plan de pliage par rapport à l'élément de contre-appui (2) monté sur le support (4), **en ce que** l'élément de contre-appui (2) monté fixe sur le support (4) et l'élément de contre-appui (3) mobile sont associés respectivement à la mâchoire fixe (20) et à la mâchoire mobile (21), **en ce que** l'élément de contre-appui (3) mobile, au moins dans la position active du contre-appui de pliage (1), est verrouillé dans le sens d'une interdiction du déplacement avec la mâchoire mobile (21), transversalement au plan de pliage, et **en ce que** les sur faces extérieures (13, 14) éloignées l'une de l'autre des deux éléments de contre-appui (2, 3) sont tournées vers les surfaces intérieures (23, 24) en vis-à-vis des mâchoires de serrage et de guidage (20, 21) et, lorsque les mâchoires de guidage et de serrage (20, 21) sont appliquées sur les surfaces latérales d'une barre de profilé creux (12) à plier, sont en appui sur les surfaces (23, 24) des mâchoires de serrage et de guidage (20, 21) en contact avec les surfaces latérales de la barre de profilé de creux (12).

2. Dispositif selon la revendication 1, **caractérisé en ce que** l'élément de contre-appui (3) mobile est soumis à l'action d'un ressort (9) qui l'écarte de l'élément de contre-appui (2) monté sur le support (4).

3. Dispositif selon une des revendications 1 ou 2, **caractérisé en ce que** l'élément de contre-appui (3) mobile est fixé à au moins deux barres de guidage (6) qui sont guidées dans des glissières (7) dans le support (4) pour l'élément de contre-appui (1).

4. Dispositif selon la revendication 2 ou 3, **caractérisé en ce qu'**un ressort de compression (9) agit sur les barres de guidage (6) pour l'élément de contre-appui (3) du côté du support (4) opposé au contre-appui de pliage (1).

5. Dispositif selon la revendication 4, **caractérisé en ce que** le ressort de compression (9) agit sur une plaque (8) qui est liée aux barres de guidage (6) et prend appui sur un élément (40, 49) qui est lié au moins directement au support (4).

6. Dispositif selon une des revendications 1 à 5, **caractérisé en ce que** le contre-appui de pliage (1) peut être amené depuis une position de repos, dans laquelle il n'est pas engagé entre les mâchoires de serrage et de guidage (20, 21), dans une position d'attente (figure 1) et de là dans une position active, entre les mâchoires de serrage et de guidage (20, 21), dans laquelle les extrémités libres (10, 16) des éléments de contre-appui (2, 3) sont disposées à une distance de l'appui pour la barre de profilé creux à plier (12), prévu entre les mâchoires de serrage et de guidage (20, 21), qui est inférieure à la hauteur de la barre de profilé creux (12) mesurée dans le plan de pliage.

7. Dispositif selon une des revendications 1 à 6, **caractérisé en ce que** les extrémités libres (10) des éléments de contre-appui (2, 3), vu transversalement au plan de pliage, ont une forme de coin.

8. Dispositif selon une des revendications 1 à 7, **caractérisé en ce que** des embouts (16) en forme de bourrelets sont prévus aux extrémités libres (10) des éléments de contre-appui (2, 3).

9. Dispositif selon la revendication 8, **caractérisé en ce qu'**au moins les embouts (16) en forme de bourrelets sont en retrait par rapport aux surfaces latérales (13, 14) des éléments de contre-appui (2, 3) tournées vers les surfaces (23, 24) mutuellement en vis-à-vis des mâchoires de serrage et de guidage (20, 21), de sorte qu'elles présentent une certaine distance par rapport auxdites surfaces (23, 24) mutuellement en vis-à-vis desdites mâchoires de serrage et de guidage (20, 21).

10. Dispositif selon la revendication 1, **caractérisé en ce que** l'élément de contre-appui (3) mobile présente un embout (30) en forme de crochet auquel est associée une échancrure de verrouillage (31) dans la mâchoire (21) mobile, l'embout (30) en forme de crochet s'engageant dans l'échancrure de verrouillage (31) lorsque le contre-appui de pliage (1) est amené dans sa position active.

11. Dispositif selon une des revendications 1 à 10, **caractérisé en ce qu'**il est prévu pour amener le contre-appui (1) dans la position de repos, dans la position d'attente et dans la position active, un dispositif (50) avec trois vérins (51, 52, 53) à fluide sous pression, qui agissent au moins de manière indirecte sur le contre-appui de pliage (1).

12. Dispositif selon la revendication 11, **caractérisé en ce que** le dispositif (50) de vérins à fluide sous pression agit par l'intermédiaire d'un élément (45) sur le bloc (42) portant le moyen de fixation (40) pour le support (4).

13. Dispositif selon la revendication 11 ou 12, **caractérisé en ce que** les vérins à fluide sous pression (51, 52 et 53) du dispositif ont des courses de déplacement différentes.

14. Dispositif selon une des revendications 11 à 13, **caractérisé en ce que** le vérin à fluide sous pression (51) du dispositif (50) présentant la plus longue course de déplacement est prévu pour amener le contre-appui de pliage (1) dans la position de repos.

15. Dispositif selon une des revendications 11 à 14, **caractérisé en ce qu'**un vérin à fluide sous pression (53) avec une course de déplacement plus courte que la course de l'un (51) des vérins mais plus longue que la course de l'autre (52) vérin à fluide sous pression est prévu pour amener le contre-appui de pliage (1) de la position de repos dans la position d'attente.

16. Dispositif selon une des revendications 11 à 15, **caractérisé en ce que** le vérin à fluide sous pression (52) qui déplace le contre-appui de pliage (1) entre la position active et la position d'attente est le vérin (52) avec la plus petite course de déplacement.
